(19) Europäisches Patentamt
European Patent Office
Office européen des brevets

(11) **EP 4 691 778 A1**

(12) **EUROPÄISCHE PATENTANMELDUNG**

(43) Veröffentlichungstag:
**11.02.2026  Patentblatt 2026/07**

(21) Anmeldenummer: **25194258.7**

(22) Anmeldetag: **06.08.2025**

(51) Internationale Patentklassifikation (IPC):
**B41F 33/00** (2006.01)      **B41J 15/00** (2006.01)
**G01J 3/46** (2006.01)        **G01N 21/25** (2006.01)
**H04N 1/60** (2006.01)

(52) Gemeinsame Patentklassifikation (CPC):
**B41F 33/0036; B41F 33/0081; G01J 3/46;**
**H04N 1/6033; H04N 1/6036; H04N 1/6047;**
B41F 19/001; B41F 33/02; B41P 2233/51;
B41P 2233/52; G06T 1/00

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH LA MA MD TN**

(30) Priorität: **06.08.2024  DE 102024122403**

(71) Anmelder: **Bundesdruckerei GmbH**
**10969 Berlin (DE)**

(72) Erfinder:
• **Peinze, Franziska**
**12557 Berlin (DE)**
• **Trieglaff-Opitz, Andreas**
**10369 Berlin (DE)**
• **Walther, Ronny**
**93426 Roding (DE)**
• **Kirschbauer, Maximilian**
**93466 Chamerau (DE)**
• **Höcherl, Franz**
**94372 Rattiszell (DE)**
• **Kirschbauer, Lukas**
**93444 Bad Kötzing (DE)**

(74) Vertreter: **Obst, Bernhard**
**Patentanwälte Bressel und Partner mbB**
**Postdamer Platz 10**
**10785 Berlin (DE)**

(54) **PRÜFVORRICHTUNG UND PRÜFVERFAHREN FÜR EIN FARBIGES DRUCKBILD EINES ALS ROLLE BEREITGESTELLTEN BEDRUCKSTOFFS**

(57)     Die Erfindung betrifft eine Prüfvorrichtung für ein farbiges Druckbild eines als Rolle (120) bereitgestellten Bedruckstoffs (100) sowie ein Verfahren zu deren Prüfung. Die Prüfvorrichtung umfasst eine Steuereinrichtung, eine Transporteinrichtung (200) zum Abwickeln und Aufwickeln des Bedruckstoffs (100), so dass er als Bahn (110) durch einen Arbeitsbereich geführt ist, eine optische Erfassungseinrichtung (500), die ausgebildet ist, mindestens einen Teil des farbigen Druckbilds auf dem Bedruckstoff (100) zu erfassen; eine Verfahreinrichtung (600) und einen Farbmesskopf (700), der mit der Verfahreinrichtung (600) gekoppelt ist, wobei die Verfahreinrichtung (600) ausgebildet ist, den Farbmesskopf (700) beabstandet zur Oberfläche (115) der Bahn (110) des Bedruckstoffs (100) zu positionieren, wobei der Farbmesskopf (700) ausgebildet ist, Farbkoordinaten zu ermitteln und auszugeben, welche eine Farbe des sich in einem Messbereich (705) befindlichen Bedruckstoffs (100) angeben, wobei die Steuereinrichtung ausgebildet ist, anhand des von der mindestens einen optischen Erfassungseinrichtung (500) erfassten einen Teils des Druckbilds eine Position und Ausrichtung des Druckbilds relativ zu der Verfahreinrichtung (600) zu ermitteln und den Farbmesskopf (700) mittels der Verfahreinrichtung (600) an mindestens einer Messposition zu positionieren und die Farbkoordinaten zu bestimmen und auszugeben.

Fig.2

**Beschreibung**

Die Erfindung betrifft eine Prüfvorrichtung, mit der insbesondere Farbwerte eines farbigen Druckbildes auf einem Bedruckstoff geprüft werden können, der als Rolle bereitgestellt wird. Insbesondere betrifft die Erfindung das Prüfen von farbigen Druckbildern, die im Produktionsprozess von Wert- und Sicherheitsdokumenten auftreten.

Moderne Wert- und Sicherheitsdokumente umfassen häufig Laminationskörper. Diese werden aus mehreren Substratschichten gefertigt, die in der Regel unter Einwirkung von Druck und Zuführen von Wärme flächig miteinander verbunden werden. Eine optische Erscheinung des Laminationskörpers wird häufig durch eine Druckschicht festgelegt, die vor dem Laminieren auf eine der Substratschichten aufgedruckt ist. Eine solche Substratschicht, beispielsweise ein Film aus Polycarbonat oder einem anderen Kunststoffmaterial, stellt somit im Fertigungsprozess einen Bedruckstoff dar, der zumindest auf einer Oberfläche mit einem Druckbild versehen wird. Dieses ist, um einen optisch ansprechenden Dokumentkörper zu fertigen, vorzugsweise farbig ausgebildet. Besonders bevorzugt ist dieser mehrfarbig oder sogar bunt ausgebildet.

Es hat sich als vorteilhaft herausgestellt, den Bedruckstoff als Rolle bereitzustellen und zu bedrucken. Auf einer solchen Rolle sind somit die Oberflächengestaltungen für eine Vielzahl insbesondere individuell verschiedener Laminationskörper, die insbesondere Wert- oder Sicherheitsdokumente sind, ausgebildet.

Im Stand der Technik ist es bekannt, zusätzlich zu der Oberflächengestaltung für die einzelnen Laminationskörper auch Prüffelder auf den Bedruckstoff aufzudrucken, die in der Regel eine homogene Farbigkeit aufweisen. Diese Prüffelder dienen dazu, eine Qualitätskontrolle des Druckprozesses auf einfache Weise durchführen zu können, indem für die einzelnen Prüffelder jeweils die Farbkoordinaten bezüglich einer Farbmetrik ermittelt werden. Die Ermittlung erfolgt mit einem Farbmesskopf, der gezielt über den einzelnen Prüffeldern positioniert wird. Der Farbmesskopf ist in der Regel als Spektralfotometer ausgebildet. Setzt man voraus, dass der Druckprozess keine systematischen Abweichungen zwischen einem Drucken der grafischen Ausgestaltung für einen Laminationskörper und einem benachbart hierzu ausgebildeten Prüffeld aufweist, kann die Druckqualität, insbesondere eine Einhaltung der gewünschten Farbwerte an den homogen farbig bedruckten Druckfeldern, stellvertretend für die Farbausbildung in der aufgedruckten grafischen Gestaltung für die Dokumentkörper geprüft werden.

Diese Art der Überprüfung einer Einhaltung der geforderten Farbwerte ist im Stand der Technik bekannt. Dort werden stichprobenartig einzelne Bedruckstoffrollen aus dem Produktionsbetrieb entnommen und für diese manuell ein Farbwert für einzelne Prüffelder mittels eines Farbmesskopfs vermessen. Um sicherzustellen, dass die Qualität des Druckprozesses über die gesamte Druckdauer des Bedruckstoffs eingehalten wird, ist es notwendig, den Bedruckstoff abzuwickeln und auf einen anderen Rollenkern oder Rollenträger zeitgleich mit dem Abwickeln aufzuwickeln. Bei diesem manuell durchgeführten Prozess ist es nicht möglich, den Bedruckstoff so auf- und abzuwickeln, dass die Kanten des Bedruckstoffs in der Rolle alle genau in einer Ebene liegen, d.h. kantenbündig sind, wie dieses für den weiteren Verarbeitungsprozess notwendig ist, um die Druckbilder der einzelnen Laminationskörpern im Register zu anderen Substratschichten im Laminationsprozess korrekt ausrichten zu können. Ferner müssen die Ausrichtung und Positionierungen des Messkopfs relativ zum Druckbild manuell vorgenommen und die hierbei ermittelten Positionierungswerte als auch die gemessenen Farbkoordinaten manuell in eine elektronische Datenverarbeitung eingeben werden. Daher ist die Messung fehleranfällig. Eine erreichbare Reproduzierbarkeit ist ebenfalls begrenzt.

Der Erfindung liegt daher die technische Aufgabe zugrunde, die Qualität eines farbigen Druckbilds eines als Rolle bereitgestellten Bedruckstoffs effektiver prüfen zu können.

Die Erfindung wird durch eine Prüfvorrichtung mit den Merkmalen des Patentanspruchs 1 sowie ein Prüfverfahren mit den Merkmalen des Patentanspruchs 10 gelöst. Vorteilhafte Ausführungsformen der Erfindung ergeben sich aus den Unteransprüchen.

Grundidee der Erfindung

Der Erfindung liegt die Idee zugrunde, eine Prüfvorrichtung zu schaffen, die eine Transporteinrichtung aufweist, welche ausgebildet ist, den auf der Rolle bereitgestellten Bedruckstoff zeitgleich abzuwickeln und aufzuwickeln, sodass der Bedruckstoff als Bahn durch einen Arbeitsbereich geführt ist. Ferner ist mindestens eine optische Erfassungseinrichtung vorgesehen, die zumindest einen Teil des farbigen Druckbilds des Bedruckstoffs erfasst. Mit dieser wird mindestens ein Druckbildelement erfasst, anhand dessen eine Position des Bedruckstoffs und des Druckbilds hinsichtlich Position und Ausrichtung relativ zu einer Verfahrvorrichtung ermittelt werden kann. Die Verfahrvorrichtung ist mit einem Farbmesskopf gekoppelt, der durch die Verfahrvorrichtung beabstandet von einer Oberfläche der Bahn des Bedruckstoffs parallel zu dieser Oberfläche verfahren werden kann, um einen Messbereich des Farbmesskopfs gesteuert auf der Oberfläche des Bedruckstoffs zu positionieren. Hierdurch wird es möglich, den Messbereich beispielsweise gezielt in Prüffeldern zu positionieren, um deren Farbkoordinaten zu ermitteln. Der Farbmesskopf ist hierbei ausgebildet, für mindestens eine Farbmetrik zugehörige Farbkoordinaten zu ermitteln und auszugeben. Die Farbkoordinaten geben die Farbe des sich in den Messbereich des Farbmesskopfs befindlichen Oberfläche des Bedruckstoffs, d.h. die Farbe des Druckbilds, an.

## Definitionen

Als Bedruckstoff wird ein Substrat bezeichnet, auf welches eine grafische Gestaltung aufgedruckt wird.

Als Druckbild wird die grafische Ausgestaltung bezeichnet, die mittels eines Druckverfahrens auf den Bedruckstoff aufgedruckt ist.

Als Druckverfahren für das Ausbilden eines Druckbilds kommen unterschiedlichste, dem Fachmann bekannte Druckverfahren in Betracht. Um individuell gestaltete Dokumentkörper herzustellen, eignen sich insbesondere digitale Druckverfahren. Besonders geeignet ist ein Tintenstrahldruckverfahren, bei dem unterschiedlich farbige Tinten, welche Grundfarben eines Gamuts darstellen, verwendet werden, um bunte Druckbilder zu erzeugen. Aufgrund einer Farbaddition oder Farbsubtraktion werden je nach Anteil der lokal im Druckbild enthaltenen Farbmittel unterschiedliche Farbeindrücke von einem menschlichen Betrachter wahrgenommen. Aufgrund der unterschiedlichen Farbmittel, die unterschiedliche Remissions- und Absorptionseigenschaften im sichtbaren Wellenlängenbereich aufweisen, ist mit dem Farbeindruck ein entsprechendes Remissions- oder Absorptions- bzw. Transmissionsspektrum verknüpft. Dieses kann beispielsweise mit einem Spektralfotometer vermessen werden. Der sich ergebende Farbeindruck wird auch als Farbe oder Farbigkeit eines Objekts bezeichnet. Es gibt unterschiedliche Farbsysteme, in denen ein Farbwert in Form von Koordinaten angegeben werden kann, der die Farbe des entsprechenden Objekts charakterisiert und angibt.

Eine Farbmetrik ist eine Messvorschrift, die angibt, wie die Farbkoordinaten zu einzelnen Farbwerten bzw. einzelnen Farben in Beziehung stehen.

Ein Code ist ein aus grafischen Codeelementen ausgebildetes Druckbildelement, in dem eine Information gemäß einer Codierungsvorschrift codiert ist. Beispiele für grafische Codes stellen beispielsweise Codes, Matrixcodes wie QR-Codes oder Ähnliches dar. Diese können schwarz/weiß, farbig oder auch bunt ausgestaltet sein.

Als farbig wird ein Gegenstand bezeichnet, der bei einem gesunden menschlichen Betrachter einen Farbeindruck hervorruft. Schwarz und weiß werden nicht als Farben aufgefasst. Als bunt wird ein Gegenstand bezeichnet, der an unterschiedlichen Positionen seiner Oberfläche oder seines Volumens unterschiedliche Farbeindrücke bei einem gesunden menschlichen Betrachter hervorruft, deren Anzahl die Anzahl der verschiedenfarbigen verwendeten Tinten oder Druckfarben übersteigt.

## Bevorzugte Ausführungsformen

Insbesondere betrifft die Erfindung eine Prüfvorrichtung für ein farbiges Druckbild eines als Rolle bereitgestellten Bedruckstoffs, umfassend eine Steuereinrichtung, eine mit der Steuereinrichtung gekoppelte Transporteinrichtung zum zeitgleichen gesteuerten Abwickeln und Aufwickeln des auf der Rolle bereitgestellten Bedruckstoffs, sodass der Bedruckstoff als Bahn durch einen Arbeitsbereich geführt ist, mindestens eine mit der Steuereinrichtung gekoppelte optische Erfassungseinrichtung, die ausgebildet ist, mindestens einen Teil des farbigen Druckbilds auf dem Bedruckstoff zu erfassen; eine mit der Steuereinrichtung gekoppelte Verfahreinrichtung und einen mit der Steuereinrichtung gekoppelten Farbmesskopf, der mit der Verfahreinrichtung gekoppelt ist, wobei die Verfahreinrichtung ausgebildet ist, den Farbmesskopf beabstandet zur Oberfläche der Bahn des Bedruckstoffs und parallel zu dieser Oberfläche zu verfahren, um einen Messbereich des Farbmesskopfs gesteuert auf der Oberfläche des Bedruckstoffs zu positionieren, wobei der Farbmesskopf ausgebildet ist, für mindestens eine Farbmetrik zugehörige Farbkoordinaten zu ermitteln und auszugeben, welche eine Farbe des sich in dem Messbereich des Farbmesskopfs befindlichen Oberfläche des Bedruckstoffs angeben, wobei die Steuereinrichtung ausgebildet ist, anhand des von der mindestens einen optischen Messeinrichtung erfassten mindestens einen Teils des Druckbilds eine Position und Ausrichtung mindestens eines Druckbildelements relativ zu der Verfahreinrichtung zu ermitteln und den Farbmesskopf mittels der Verfahreinrichtung an mindestens eine vorgegebene Position des Druckbilds zu positionieren und die Farbkoordinaten bezüglich der mindestens einen Farbmetrik zu bestimmen und auszugeben.

Ferner wird ein Verfahren zum Prüfen eines farbigen Druckbilds eines auf einer Rolle bereitgestellten Bedruckstoffs geschaffen, umfassend die Schritte:

zeitgleiches Aufwickeln und Abwickeln des Bedruckstoffs mittels einer Transportvorrichtung, sodass eine Bahn des abgewickelten Bedruckstoffs durch einen Arbeitsbereich geführt wird,
optisches Erkennen mindestens eines Druckbildelements,
Ermitteln der relativen Position und relativen Ausrichtung des Druckbildelements zu einer Verfahreinrichtung, mit der ein Farbmesskopf verbunden ist,
Verfahren des Farbmesskopfs beabstandet zur Oberfläche der Bahn des Bedruckstoffs und parallel zu dieser Oberfläche und Positionieren eines Messbereichs des Farbmesskopfs an mindestens einer Messposition auf der Oberfläche des Bedruckstoffs zu positionieren, deren Position relativ zu dem mindestens einen erkannten Druckbildelement bekannt ist und vorgegeben ist;
Erfassen der Farbkoordinaten mittels des Farbmesskopfs bezüglich mindestens einer Farbmetrik, und
Ausgeben der Farbkoordinaten, die eine Farbe des Bedruckstoffs an der mindestens eine Messposition angeben.

Vorteil der Erfindung ist es, dass eine Prüfung des Druckbilds auf automatisierte Weise durchgeführt werden kann. Darüber hinaus sind die Ergebnisse reproduzierbar, da eine Ausrichtung des Farbmesskopfs jeweils bezüglich eines erkannten Teils des Druckbilds erfolgt. Da das Auf- und Abwickeln über eine Transportvorrichtung erfolgt, kann dieses so vorgenommen werden, dass die sich ergebende Rolle des Bedruckstoffs hinsichtlich der Kanten des Bedruckstoffs ausreichend präzise ausgerichtet ist. Hierdurch ist es möglich, Prüfungen an den Halbzeugen vorzunehmen, die anschließend tatsächlich weiter zu Dokumentkörpern verarbeitet werden.

Um eine Ausrichtung der Verfahreinrichtung bezüglich des Druckbilds zu vereinfachen und zu verbessern, ist bei einer Ausführungsform vorgesehen, dass die mindestens eine optische Messeinrichtung und ein Element der Verfahreinrichtung mechanisch starr gekoppelt sind. Eine Unsicherheit hinsichtlich der Positionierung kann reduziert werden und ist im Wesentlichen nur noch durch die Erfassung der Position und Ausrichtung des erkannten Druckbildelements sowie gegebenenfalls eine Positionierungsgenauigkeit der Verfahreinrichtung bestimmt. Es treten keine oder verringerte Unsicherheiten bezüglich der optischen Messeinrichtung und der Verfahreinrichtung auf.

Eine Präzision der Messung kann dadurch weiter gesteigert werden, dass die Bahn des Bedruckstoffs während einer Vermessung von Farbkoordinaten mechanisch stabilisiert wird. Daher ist bei einer Ausführungsform vorgesehen, dass gegenüberliegend von der Verfahreinrichtung ein mit der Steuereinrichtung gekoppelter Vakuumtisch zum gesteuerten Ansaugen des Bedruckstoffs an einer homogenen Oberfläche des Vakuumtisches angeordnet ist.

Insbesondere wenn das Druckbild auf dem Bedruckstoff mit einem Tintenstrahldruckverfahren aufgedruckt wird, so erfolgt dies in der Regel abschnittsweise. In einem solchen Abschnitt werden vorzugsweise ein oder mehrere grafische Ausgestaltungen für Laminationskörperoberflächen vorzugsweise individualisiert gedruckt. Zusätzlich wird ein einfach zu erkennendes Druckbildelement gedruckt, welches auch aufgrund seiner äußeren Gestalt als L-Marke bezeichnet wird und sowohl eine genaue Positionsbestimmung des Druckbilds in dem Abschnitt des Bedruckstoffs als auch eine Ausrichtung des Druckbilds auf der Oberfläche des Bedruckstoffs zulässt. Darüber hinaus werden ein, vorzugsweise mehrere Prüffelder in dem Abschnitt gedruckt, die jeweils einen homogenen Farbwert aufweisen, d.h. einen homogenen farbigen Eindruck über ihre gesamte Fläche einem menschlichen Betrachter vermitteln. Um eine zuverlässige Positionierung des Messbereichs des Farbmesskopfs zu ermöglichen, sind die Prüffelder hinsichtlich ihrer lateralen Ausdehnung größer als eine Größe des Messbereichs des Farbmesskopfs gewählt. Umgekehrt ausgedrückt ist eine Größe des Messbereichs vorzugsweis kleiner zu wählen als eine laterale Ausdehnung von zu prüfenden Prüffeldern.

Das Prüfen des Druckbilds des Bedruckstoffs erfolgt vorzugsweise ebenfalls abschnittsweise in Abschnitten, die angepasst an die Abschnitte sind, die nacheinander auf die Oberfläche des Bedruckstoffs aufgedruckt sind. Deshalb ist vorzugsweise vorgesehen, dass nach dem Erkennen einer L-Marke die Transporteinrichtung gestoppt wird. Um mechanische Schwingungen der Bahn des Bedruckstoffs während der Vermessung auszuschließen, wird der Bedruckstoff daher vorzugsweise an eine homogene Oberfläche des Vakuumtischs angesaugt. Nach dem Beenden der Vermessung wird das Ansaugen beendet, sodass der Bedruckstoff mittels der Transporteinrichtung weiter ab- und aufgewickelt werden kann, bis die nächste L-Marke des nächsten Druckabschnitts erkannt wird. Vorzugsweise ist der Vakuumtisch so angeordnet, dass die Bahn des Bedruckstoffs, die durch den Arbeitsbereich geführt ist, die homogene Oberfläche des Vakuumtisches nicht berührt, sofern dieser den Bedruckstoff nicht ansaugt.

Besonders gute Überprüfungsergebnisse erreicht man, wenn man als Farbmesskopf einen Spektralfotometer einsetzt. Grundsätzlich sind jedoch auch andere Messeinrichtungen nutzbar, die bezüglich einer Farbmetrik die Farbigkeit in einem Messbereich ortsaufgelöst erfassen können.

Bei einer bevorzugten Ausführungsform ist daher vorgesehen, dass die mindestens eine optische Erfassungseinrichtung und die Steuereinrichtung ausgebildet sind, das mindestens eine Druckbildelement als eine L-Marke sowie deren Position und Orientierung relativ zu der optischen Erfassungseinrichtung zu erkennen und zu bestimmen.

Um eine zügige Prüfung möglichst aller Druckabschnitte zu gewährleisten, ist bei einer bevorzugten Ausführungsform vorgesehen, dass die Steuereinrichtung ausgebildet ist: den Bedruckstoff zeitgleich mittels der Transproteinrichtung abzuwickeln und aufzuwickeln,

das Abwickeln und Aufwickeln zu stoppen, wenn das mindestens eine Druckbildelement erkannt ist,
die Position und Ausrichtung des mindestens einen Druckbildelements relativ zu der Verfahrvorrichtung zu bestimmen und
den Farbmesskopf und dessen Messbereich mittels der Verfahrvorrichtung an einer vorbestimmten Position auf der Oberfläche des Bedruckstoffs zu positionieren und mittels des Farbmesskopfs die Farbkoordinaten des Bedruckstoffs im Messbereich zu ermitteln und auszugeben.

Eine so ausgestaltete Prüfvorrichtung bietet den Vorteil, dass für einzelne wiederkehrende Prüffelder statistische Auswertungen ausgeführt werden können, wie gleichmäßig der Druckprozess abläuft. Insbesondere die hochpräzise reproduzierbare Positionierungsmöglichkeit des Farbmesskopfs ist hierfür erforderlich. Um Schwankungen bei der eigentlichen Farbmessung und Positionierung ermitteln zu können, ist bei einer Ausführungsform vorgesehen, dass mehrere Prüffelder abwechselnd und mehrfach vermessen werden. Eine noch verbesserte Qualitätskontrolle kann durchgeführt werden, indem der Farbmesskopf für mindestens ein Prüffeld des Druckbilds an unterschiedlichen Positionen innerhalb des Prüffelds positioniert wird und an diesen unterschiedlichen Positionen die Farbkoordinaten ermittelt werden.

Anhand der Messwerte können die Prozessfähigkeitsindizes Cp und CpK ermittelt werden, die Kennzahlen zur statistischen Bewertung eines Prozesses in der Produktionstechnik, hier des Druckprozesses sind. Der CpK-Wert wird folgendermaßen aus einem Mittelwert $\mu$, der dazugehörigen Standardabweichung $\sigma$ und einer oberen Spezifikationsgrenze (OSG) beziehungsweise unteren Spezifikationsgrenze (USG) definiert:

$$CpK = \min \frac{(\mu - USG, OSG - \mu)}{3\sigma}.$$

Je höher dieser Wert ist, desto sicherer befindet sich die gesamte Produktion innerhalb der Spezifikation. Der Cp-Wert ist definiert als:

$$Cp = \frac{(OSG - USG)}{6\sigma}.$$

Insbesondere wenn Abweichungen gegenüber Vorgaben in einem Prüffeld festgestellt werden oder um die Qualitätskontrolle allgemein zu verbessern, ist bei einer Ausführungsform vorgesehen, dass zusätzlich ein Mikroskop mit der Verfahreinrichtung oder einer weiteren Verfahreinrichtung gekoppelt ist, deren Position und Ausrichtung relativ zu der einen Verfahrvorrichtung bekannt ist, sodass zusätzlich gesteuert durch die Steuereinrichtung Mikroskopbilder von der Oberfläche des Bedruckstoffs im Prüfbereich erfassbar und ausgebbar sind.

Um eine nachfolgende Verarbeitung des Bedruckstoffs nicht zu beeinflussen und die Möglichkeit zu schaffen, nur für einzelne Rollen des Bedruckstoffs eine Prüfung der Druckqualität vornehmen zu können, ist bei einer Ausführungsform vorgesehen, dass die Transporteinrichtung ausgebildet ist, den Bedruckstoff wieder auf den Rollenkern zurück aufzuwickeln, von dem der Bedruckstoff ursprünglich abgewickelt wurde. Der als Rolle bereitgestellte Druckstoff wird dann durch die mit der Prüfvorrichtung durchgeführte Kontrolle und Prüfung des Druckbilds nicht verändert. Die Verarbeitung wird lediglich um die Zeitdauer, die die Prüfung des Druckbilds benötigt, gegenüber einem Produktionsprozess verzögert, der ohne die Qualitätsprüfung abläuft.

Um eine Zuordnung der Farbwerte zu einzelnen Oberflächengestaltungen im Druckbild gewährleisten zu können, ist bei einer Ausführungsform vorgesehen, dass die mindestens eine optische Erfassungseinrichtung oder eine weitere Erfassungseinrichtung ausgebildet sind, einen mehrdimensionalen Code in dem Druckbild zu erfassen, um einen Druckbereich von mehreren Druckbereichen auf dem Bedruckstoff anhand eines in dem mehrdimensionalen Code codierten Identifikationsinformation zu identifizieren und die Farbkoordinaten gemeinsam mit der Identifikationsinformation und einer Positionsinformation, an der die Farbkoordinaten in dem Druckbild erfasst sind, auszugeben. Dies setzt selbstverständlich voraus, dass in den einzelnen Druckabschnitten jeweils die Identifikationsinformation, beispielsweise eine Chargen- oder Druckchargennummer codiert im Druckbild gedruckt wird. Dies erfolgt vorzugsweise in Form eines zweidimensionalen Codes, der aus gleichförmigen Musterelementen aufgebaut ist. Beispiele sind hierfür ein QR-Code oder auch ein Strichcode.

Zusätzlich ist es vorteilhaft, die Messergebnisse weiter abzusichern. Hierfür ist bei einer Ausführungsform vorgesehen, dass die Farbkoordinaten und gegebenenfalls erfasste Mikroskopbilder mit einem Zeitstempel versehen werden. Wenn ein im Druckbereich aufgedruckter mehrdimensionaler Code erfasst ist, wird vorzugsweise auch die darin codierte Information mit dem Zeitstempel versehen und mit ausgegeben. Das Ausgeben der Farbkoordinaten, Mikroskopbilder und eingelesenen Identifikationsinformationen kann beispielsweise auf einer Ausgabeeinrichtung erfolgen, die mit der Steuereinrichtung gekoppelt ist und beispielsweise als Bildschirm ausgebildet ist. Darüber hinaus können die einzelnen Farbwerte, Mikroskopbilder und die codierten Identifikationsinformationen sowie gegebenenfalls zugehörige Zeitstempel auch als elektronisches Signal ausgegeben oder besonders bevorzugt auf einem Speichermedium ausgegeben und abgelegt werden. Dieses kann Bestandteil der Prüfvorrichtung sein. Vorzugsweise ist die Prüfvorrichtung dann so ausgebildet, dass die Farbkoordinaten, Mikroskopbilder, Zeitstempel und erfasste codierte Identifikationsinformationen über eine Schnittstelle, insbesondere eine Netzwerkschnittstelle, aus der Speichereinrichtung abgerufen werden können. Die ermittelten Farbkoordinaten und Mikroskopbilder können automatisiert ausgewertet werden und Abweichungen zu Vorgaben genutzt werden, um beispielsweise den Druckprozess entsprechend anzupassen. Dem Fachmann sind hierzu vielfältige Möglichkeiten bekannt. Die Verfahrvorrichtung ist so ausgebildet, dass sie mindestens entlang zweier nicht kollinearer Achsen, die parallel zur Oberfläche der Bahn des Bedruckstoffs ausgerichtet sind, den Farbmesskopf verfahren und positionieren kann. Um auch unterschiedliche Materialstärken des Bedruckstoffs prüfen zu können und eine Justage des Farbmesskopfs zu verbessern, ist die Verfahrvorrichtung bei einer Weiterbildung so ausgebildet, dass sie den Messkopf in drei nicht zueinander kollinearen Raumrichtungen positionieren kann.

Vorzugsweise sind die einzelnen Komponenten gemeinsam in einem Gehäuse untergebracht, welches eine Zugangstür aufweist, um beispielsweise den als Rolle bereitgestellten Bedruckstoff wechseln zu können.

Das Gehäuse kann zusätzlich Be- und Entlüftungseinrichtungen umfassen, die beispielsweise die im Gehäuse vorhandene Luft reinigen, um Beschädigungen des Druckbilds während des Prüfvorgangs sowie beim Auf- und Abwickeln zu vermeiden.

Nachfolgend wird die Erfindung unter Bezugnahme auf eine Zeichnung näher erläutert. Hierbei zeigen:

Fig. 1 eine schematische Darstellung einer Prüfvorrichtung; und

Fig. 2 eine schematische Ansicht einer Prüfvorrichtung mit einem Gehäuse;

Fig. 3 eine schematische Ansicht von Prüffeldern.

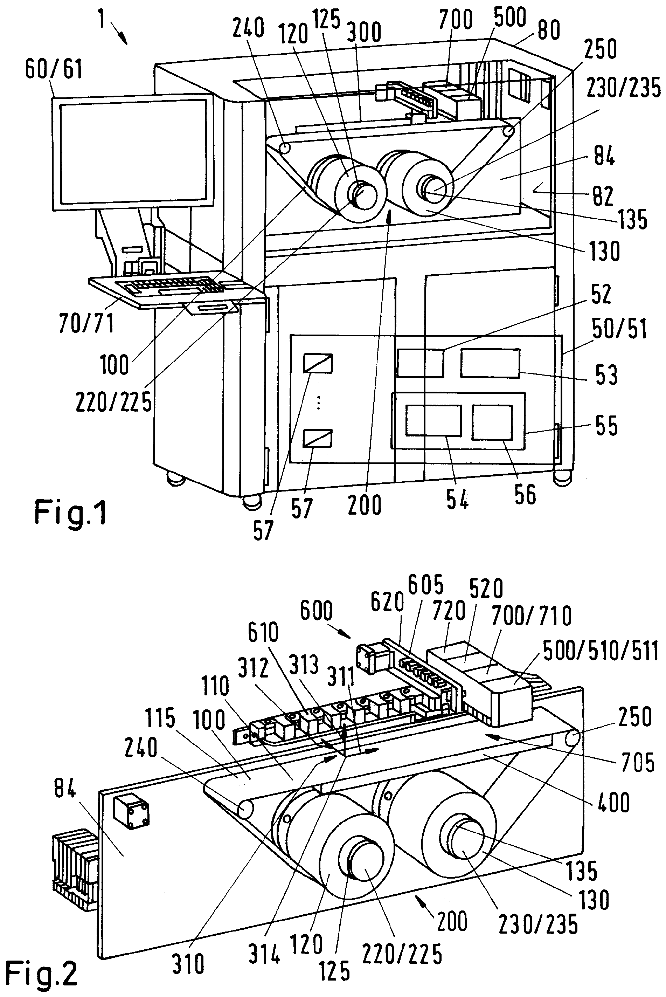

In Fig. 1 ist schematisch eine Prüfvorrichtung 1 für ein Druckbild (nicht dargestellt) eines als Rolle 120 bereitgestellten Bedruckstoffs 100 dargestellt. Dargestellt ist ein Gehäuse 80 mit einer transparenten Zugangstür 82. Die Zugangstür kann selbstverständlich auch nicht transparent ausgebildet sein. An dem Gehäuse sind eine als Bildschirm 61 ausgebildete Ausgabeeinrichtung 60 und eine als Tastatur 71 ausgebildete Eingabeeinrichtung 70 angeordnet. Diese sind mit einer als Computer 51 ausgebildeten Steuereinrichtung 50 gekoppelt, der nur als Schemazeichnung angedeutet ist. Der Computer 51 weist einen Prozessor 52 und einen Arbeitsspeicher 53 sowie einen Programmspeicher 54 auf. Der Programmspeicher kann beispielsweise auf einem Speichermedium 55, beispielsweise einem Festplattenlaufwerk oder einem SSD-Laufwerk, ausgebildet sein. Das Speichermedium 55 kann auch als Ergebnisspeicher 56 dienen. Der Computer 51 weist ferner Schnittstellen 57 auf, über die beispielsweise die Ausgabeeinrichtung 60 oder die Eingabeeinrichtung 70 mit dem Computer verbunden sind. Auch die übrigen folgenden beschriebenen Komponenten sind über Schnittstellen 58 mit der als Computer 51 ausgebildeten Steuereinrichtung 50 informations- und wirkungstechnisch gekoppelt. Aus Gründen der Übersichtlichkeit sind diese Verbindungen nicht grafisch dargestellt.

In Fig. 2 ist eine Ansicht eines Innenbereichs des Gehäuses 80 dargestellt, der nach dem Öffnen der Zugangstür 82 zugänglich ist. Gleiche technische Merkmale sind in allen Figuren mit denselben Bezugszeichen gekennzeichnet. An einer Grundplatte 84, welche beispielsweise Bestandteil des Gehäuses ist, ist eine Transporteinrichtung 200 ausgebildet. Diese umfasst eine Wickeleinrichtung 220 mit einer Rollenaufnahme 225, die ausgebildet ist, eine Rolle 120 eines Bedruckstoffs 100 aufzunehmen. Die Transporteinrichtung umfasst ferner Umlenkrollen 240, 250 sowie eine weitere Wickeleinrichtung 230 mit einer weiteren Rollenaufnahme 235. Von der Rolle 120, deren Rollenkern 125 auf der Rollenkernaufnahme 225 angeordnet ist, wird der Bedruckstoff über die Umlenkrollen 240, 250 zu einem weiteren Rollenkern 135, der auf der weiteren Rollenkernaufnahme 235 angeordnet ist, geführt. Durch einen Arbeitsbereich 300 ist somit eine gespannte Bahn des Bedruckstoffs geführt. Die Transporteinrichtung ist mit der Steuereinrichtung so gekoppelt, dass die Steuereinrichtung ein Abwickeln des Bedruckstoffs von der Rolle 120 und zeitgleich ein Aufwickeln des Bedruckstoffs auf die weitere Rolle 130 bewirkt. Hierbei wird der Bedruckstoff als Bahn 110 durch den Arbeitsbereich 300 geführt. Im Arbeitsbereich 300 ist ein Koordinatensystem 310 für Zwecke der Erläuterung eingezeichnet. Eine x-Achse 311 weist in Transportrichtung der Bahn 110 des Bedruckstoffs 100, in der der Bedruckstoff transportiert wird, während er von der Rolle 120 abgewickelt und auf die weitere Rolle 130 aufgewickelt wird. Eine y-Achse 312 weist vom Ursprung 314 zu der Grundplatte 84. Eine z-Achse 313 weist von einer Oberfläche 115 der Bahn 110 des Bedruckstoffs 100 weg nach oben. Die Achsen x, y und z bilden ein rechtwinkliges kartesisches Koordinatensystem 310.

Über der Oberseite 115 der Bahn 110 des Bedruckstoffs 100 ist mindestens eine optische Erfassungseinrichtung 500 ausgebildet. Bei der dargestellten Ausführungsform ist die mindestens eine optische Erfassungseinrichtung 500 beispielsweise als abbildende Erfassungseinrichtung 510 ausgebildet. Die mindestens eine optische Erfassungseinrichtung 500 ist ausgebildet, dass diese, wenn sie während eines Transports der Bahn 110 entlang der x-Richtung 311 über der Oberfläche 115 der Bahn 110 des Bedruckstoffs 100 positioniert ist, ein auf die Oberfläche 115 des Bedruckstoffs 100 aufgedrucktes Druckbild (nicht dargestellt) teilweise erfassen kann. Die mindestens eine Erfassungseinrichtung 500 ist so ausgebildet, dass sie mindestens ein Druckbildelement, vorzugsweise ein als L-Marke ausgebildetes Druckbildelement, erfassen kann. Die mindestens eine Erfassungseinrichtung 500 oder die hiermit gekoppelte Steuereinrichtung 50 sind ausgebildet, aus der optischen Erfassung, insbesondere einer erfassten Abbildung, als ein Druckbildelement, beispielsweise eine L-Marke, zu erkennen.

Sobald ein vorgegebenes Druckbildelement, wie die L-Marke, erkannt ist, stoppt die Steuereinrichtung 50 die Transporteinrichtung 200. Die Bahn 110 des Bedruckstoffs 100 ist dann im Arbeitsbereich 300 stationär.

Um Schwingungen um eine Ruhelage zu unterbinden, ist vorzugsweise auf der von der Oberseite 115 abgewandten Seite der Bahn 110 ein ebener Vakuumtisch 400 mit einer homogenen Oberfläche angeordnet. (Dieser Vakuumtisch ist aus Gründen der Vereinfachung in Fig. 1 nicht dargestellt) Der Vakuumtisch 400 befindet sich somit auf der gegenüberliegenden Seite der mindestens einen optischen Erfassungseinrichtung 500. Die Steuereinrichtung 50 aktiviert den Vakuumtisch 400, sodass die Bahn 110 des Bedruckstoffs 100 im Arbeitsbereich 300 an die homogene ebene Oberfläche des Vakuumtisches 400 angesaugt wird, die in Fig. 2 durch die Bahn 110 des Bedruckstoffs 100 verdeckt ist. In der dargestellten Ausführungsform sind die homogene ebene Oberfläche und der Vakuumtisch hinsichtlich ihrer Ausdehnung parallel der y-Achse 312 an eine Breite der Bahn 110 angepasst. Der Vakuumtisch 400 und die homogene ebene Oberfläche können jedoch bei anderen Ausführungsformen auch eine größere Ausdehnung parallel zur y-Achse 312 als die Bahn 110 des Bedruckstoffs 100 aufweisen. Hierdurch wird die zuverlässige Auflage der gesamten Fläche der Bahn 110 im Arbeitsbereich 300 gewährleistet.

Mittels der mindestens einen optischen Erfassungseinrichtung 500 wird die genaue Position sowie eine Ausrichtung des Druckbildes bezogen auf eine Verfahreinrichtung 600 ermittelt. Ohne Beschränkung der Allgemeinheit sind ein mit der Verfahreinrichtung 600 gekoppeltes Koordinatensystem und das hier eingezeichnete Koordinatensystem 310 des Arbeitsbereichs identisch orientiert. Die Verfahreinrichtung 600 umfasst einen x-Achsenfahrtisch 610, auf dem ein y-Achsenausleger 620 beweglich gelagert ist. Der x-Achsenfahrtisch 610 kann sich parallel zur x-Achse 311 bewegen. Der y-Achsenausleger 620 bewegt sich parallel zur y-Achse 312 relativ zum x-Achsenfahrtisch 610. Bei der dargestellten Ausführungsform ist die mindestens eine optische Erfassungseinrichtung 500 am y-Achsenausleger 620 befestigt. Dies bedeutet, dass die mindestens eine Messeinrichtung mit der Einrichtung 600 relativ zur Oberfläche 115 des Bedruckstoffs 100 positionierbar ist. Vorzugsweise ist die Verfahreinrichtung 600 so ausgebildet, dass der y-Achsenausleger 620 gemeinsam mit der mindestens einen optischen Erfassungseinrichtung 500 aus dem Arbeitsbereich herausgefahren werden kann, sodass diese ein Einfädeln der Bahn 110 des Bedruckstoffs 100 in den Arbeitsbereich nicht behindern.

Zusätzlich zu der mindestens einen optischen Erfassungseinrichtung sind bei der dargestellten Ausführungsform mit dem y-Achsenausleger auch der Farbmesskopf 700 sowie ein Mikroskop 720 gekoppelt. Auch der Farbmesskopf sowie das Mikroskop 720 können somit mit der Verfahreinrichtung 600 bezüglich der Oberfläche 110 des Bedruckstoffs 100 im Arbeitsbereich 300 parallel zu der Oberfläche 115 verfahren werden.

Zusätzlich können für die optische Erfassungseinrichtung 500 über den Farbmesskopf 700 sowie das Mikroskop 720 gemeinsam oder jeweils getrennt zusätzlich y-Verfahreinheiten ausgebildet sein, über die die einzelnen Komponenten parallel zur z-Achse gegenüber dem y-Ausleger angepasst werden können. Ein in der z-Achse verstellbarer Arm kann auch zwischen dem x-Achsenfahrtisch 610 und dem y-Ausleger alternativ ausgebildet sein. Weiter zusätzlich kann mit dem y-Ausleger 620 eine weitere optische Erfassungseinrichtung 520 gekoppelt sein, welche speziell dafür ausgebildet ist, einen grafisch ausgebildeten zweidimensionalen Code zu erfassen und im Zusammenwirken mit der hiermit gekoppelten Steuereinrichtung 50 zu decodieren. Dem zweidimensionalen Code ist eine Identifikationsinformation codiert, die vorzugsweise mit einem Abschnitt korrespondiert, der im Arbeitsbereich im Stillstand der Bahn des Bedruckstoffs vorzugsweise hinsichtlich der Druckqualität geprüft werden kann. Dieser Abschnitt ist vorzugsweise ebenfalls in einem Druckarbeitsgang bedruckt worden.

Alternativ kann auch die mindestens eine optische Erfassungseinrichtung für das Erfassen des zweidimensionalen Codes entsprechend ausgebildet sein, insbesondere wenn diese als abbildende Einrichtung ausgebildet ist. Die weitere optische Erfassungseinrichtung 520 kann auch starr bezüglich des Arbeitsbereiches 300 an der Grundplatte 84 befestigt sein, da eine präzise Ausrichtung bezüglich des Druckbilds bzw. der Bahn 100 in der Regel nicht notwendig ist, um einen zweidimensionalen grafischen Code zu erfassen und decodieren zu können.

Bei abweichenden Ausführungsformen kann das Mikroskop 720 mit einer eigenen Verfahreinrichtung ausgestattet sein, deren Position und Orientierung relativ zu der einen Verfahreinrichtung 600 oder der optischen Erfassungseinrichtung 500 präzise bekannt ist. Bei anderen Ausführungsformen kann auch die optische Erfassungseinrichtung starr mit der Grundplatte 84 gekoppelt sein oder mit einer eigenen Verfahreinrichtung gekoppelt sein, wobei erneut gilt, dass eine exakte Positionierung und Ausrichtung bezüglich der mindestens einen optischen Erfassungseinrichtung 500 und der Verfahreinrichtung 600 bekannt sein müssen.

Nachdem die genaue Position des Druckbilds relativ zu der mindestens einen optischen Erfassungseinrichtung 500 bekannt ist sowie gegebenenfalls die Stellung des x-Achsenfahrtisches 610 sowie des y-Achsensauslegers 620, kann die Verfahreinrichtung genutzt werden, um relativ zu der bekannten Ausgangsstellung der Verfahreinrichtung den mindestens einen Farbmesskopf 700 bzw. dessen Messbereich 705 auf der Oberseite 115 des Bedruckstoffes 100 an vorgegebenen Positionen, an denen beispielsweise Prüffelder aufgedruckt sind, zu positionieren und die Farbkoordinaten für die entsprechenden Positionen zu bestimmen. Hierbei können unterschiedliche Positionen gemäß einem Prüfplan, der mit dem Drucklayout des Druckbilds korrespondiert, angefahren werden und die entsprechenden Farbkoordinaten ermittelt werden. Diese werden vorzugsweise mit einem Zeitstempel und der Identifikationsinformation abgelegt, die in einem grafisch zusammen aufgedruckten 2D-Code gespeichert ist.

Sobald die erforderlichen Messwerte erfasst sind und gegebenenfalls zusätzlich Mikroskopaufnahmen erfasst und abgespeichert sind, wird der am Vakuumtisch herrschende Unterdruck beendet und gegebenenfalls sogar ein gasförmiges Fluid eingeblasen, um eine sichere Trennung der Bahn 110 des Bedruckstoffs 100 von der homogenen Oberfläche des Vakuumtisches 400 zu erreichen.

Die Steuereinrichtung 50 steuert die Transporteinrichtung 200 an, dass das Abwickeln und zeitgleiche Aufwickeln des Bedruckstoffs fortgesetzt wird, bis das nächste Druckbildelement, beispielsweise die nächste L-Markierung, von der mindestens einen optischen Erfassungseinrichtung erkannt wird und der Transport des Bedruckstoffs erneut gestoppt wird. Sind alle bedruckten Abschnitte der Rolle 120 hinsichtlich der Druckqualität geprüft, so steuert die Steuereinrichtung die Transporteinrichtung 200 vorzugsweise so an, dass der Bedruckstoff von der weiteren Rolle 130 zurück auf die Rolle 120 gespult wird. Um ein gleichmäßiges Wickeln zu erreichen, sodass die Kanten bündig übereinanderliegen, können ein oder mehrere nicht dargestellter Kantensensoren vorgesehen sein. Zusätzlich ist mindestens eine Achse der Wickeleinrichtung 220, der weiteren Wickeleinrichtung 230 oder der Umlenkrolle 240 oder 250 axial auslenkbar, um einen möglichen Versatz beim Auf- und Abwickeln gesteuert ausgleichen zu können.

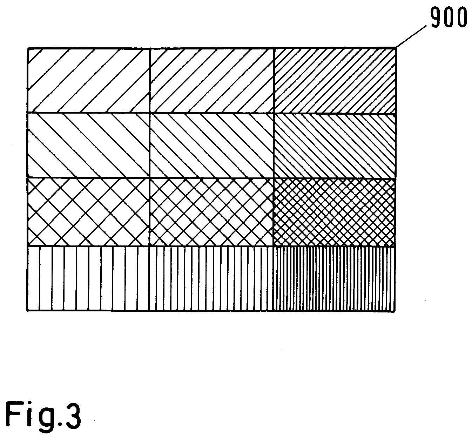

In Fig. 3 ist eine schematische Ansicht von Prüffeldern 900 gezeigt, die auf einen Bedruckstoff 100, aufgedruckt sind. Diese weisen unterschiedliche Farbtöne, gekennzeichnet durch die Art der Schraffur, und unterschiedliche Helligkeiten auf, gekennzeichnet durch die Schraffurdichte. Je geringer die Dichte ist, desto heller ist der Farbeindruck.

Es versteht sich für den Fachmann, dass lediglich eine beispielhafte Ausführungsform beschrieben ist. Die mit den einzelnen alternativen Ausführungsformen beschriebenen Merkmale können in beliebiger Kombination genutzt werden, um die Erfindung umzusetzen.

Bezugszeichen

| | |
|---|---|
| 1 | Prüfvorrichtung |
| 50 | Steuereinrichtung |
| 51 | Computer |
| 52 | Prozessor |
| 53 | Arbeitsspeicher |
| 54 | Programmspeicher |
| 55 | Speichermedium (HD/SSD) |
| 56 | Ergebnisspeicher |
| 57 | Schnittstellen |
| 60 | Ausgabeeinrichtung |
| 61 | Bildschirm |
| 70 | Eingabeeinrichtung |
| 71 | Tastatur |
| 80 | Gehäuse |
| 82 | Zugangstür |
| 84 | Grundplatte |
| 100 | Bedruckstoff |
| 105 | Oberseite |
| 110 | Bahn |
| 115 | Oberfläche |
| 120 | Rolle |
| 125 | Rollenkern |
| 130 | weitere Rolle |
| 135 | weiterer Rollenkern |
| 200 | Transporteinrichtung |

| | |
|---|---|
| 220 | Wickeleinrichtung |
| 225 | (angetriebene) Rollenkernaufnahme |
| 230 | weitere Wickeleinrichtung |
| 235 | weitere (angetriebene) Rollenkernaufnahme |
| 240 | Umlenkrolle |
| 250 | Umlenkrolle |
| 300 | Arbeitsbereich |
| 310 | Koordinatensystem |
| 311 | x-Achse |
| 312 | y-Achse |
| 313 | z-Achse |
| 314 | Ursprung |
| 400 | Vakuumtisch |
| 500 | mindestens eine optische Erfassungseinrichtung |
| 510 | mindestens eine Druckelementerfassungseinrichtung |
| 511 | Abbildende Erfassungseinrichtung |
| 520 | weitere Erfassungseinrichtung (DMC) |
| 600 | Verfahreinrichtung |
| 605 | Element |
| 610 | x-Achsenfahrtisch |
| 620 | y-Achsenausleger |
| 700 | Farbmesskopf |
| 705 | Messbereich |
| 710 | Spektralphotometer |
| 720 | Mikroskop |
| 900 | Prüffelder |

**Patentansprüche**

1.  Prüfvorrichtung (1) für ein farbiges Druckbild eines als Rolle (120) bereitgestellten Bedruckstoffs (100) umfassend:

   eine Steuereinrichtung (50),
   eine mit der Steuereinrichtung (50) gekoppelte Transporteinrichtung (200) zum zeitgleichen gesteuerten Abwickeln und Aufwickeln des auf der Rolle (120) bereitgestellten Bedruckstoffs (100), so dass der Bedruckstoff (100) als Bahn (110) durch einen Arbeitsbereich (300) geführt ist,
   mindestens eine mit der Steuereinrichtung (50) gekoppelte optische Erfassungseinrichtung (500), die ausgebildet ist, mindestens einen Teil des farbigen Druckbilds auf dem Bedruckstoff (100) zu erfassen;
   eine mit der Steuereinrichtung (50) gekoppelte Verfahreinrichtung (600) und
   einen mit der Steuereinrichtung (50) gekoppelten Farbmesskopf (700), der mit der Verfahreinrichtung (600) gekoppelt ist,
   wobei die Verfahreinrichtung (600) ausgebildet ist, den Farbmesskopf (700) beabstandet zur Oberfläche (115) der Bahn (110) des Bedruckstoffs (100) und parallel zu dieser Oberfläche (115) zu verfahren, um einen Messbereich (705) des Farbmesskopfs (700) gesteuert auf der Oberfläche (115) des Bedruckstoffs (100) zu positionieren, wobei der Farbmesskopf (700) ausgebildet ist, für mindestens eine Farbmetrik zugehörige Farbkoordinaten zu ermitteln und auszugeben, welche eine Farbe des sich in dem Messbereich (705) des Farbmesskopfs befindlichen Oberfläche (115) des Bedruckstoffs (100) angeben, wobei die Steuereinrichtung (50) ausgebildet ist, anhand des von der mindestens einen optischen Messeinrichtung (500) erfassten mindestens einen Teils des Druckbilds eine Position und Ausrichtung mindestens eines Druckbildelements relativ zu der Verfahreinrichtung (600) zu ermitteln und den Farbmesskopf (700) mittels der Verfahreinrichtung (600) an mindestens eine vorgegebene Position des Druckbilds zu positionieren und die Farbkoordinaten bezüglich der mindestens einen Farbmetrik zu bestimmen und auszugeben.

2. . Prüfvorrichtung (1) nach Anspruch 1, **dadurch gekennzeichnet, dass** die mindestens eine optische Messeinrichtung (500) und ein Element (610) der Verfahreinrichtung (600) mechanisch starr gekoppelt sind.

3. . Prüfvorrichtung (1) nach Anspruch 1 oder 2, **dadurch gekennzeichnet, dass** gegenüberliegend von der Verfahreinrichtung (600) ein mit der Steuereinrichtung (50) gekoppelter Vakuumtisch (400) zum gesteuerten Ansaugen des Bedruckstoffs (100) an einer homogenen Oberfläche des Vakuumtisches (400) angeordnet ist.

4. . Prüfvorrichtung (1) nach einem der vorangehenden Ansprüche, **dadurch gekennzeichnet, dass** der Farbmesskopf (700) ein Spektralphotometer ist.

5. . Prüfvorrichtung (1) nach einem der vorangehenden Ansprüche, **dadurch gekennzeichnet, dass** die mindestens eine optische Erfassungseinrichtung (500) und die Steuereinrichtung (50) ausgebildet sind, als das mindestens eine Druckbildelement ein L-Marke sowie deren Position und Orientierung relativ zu der optischen Erfassungseinrichtung oder der Verfahreinrichtung (600) zu erkennen und zu bestimmen.

6. . Prüfvorrichtung (1) nach einem der vorangehenden Ansprüche, **dadurch gekennzeichnet, dass** die Steuereinrichtung (50) ausgebildet ist:

den Bedruckstoff (100) zeitgleich mittels der Transporteinrichtung (200) abzuwickeln und aufzuwickeln, das Abwickeln und Aufwickeln zu stoppen, wenn das mindestens eine Druckbildelement erkannt ist, die Position und Ausrichtung des mindestens einen Druckbildelements relativ zu der Verfahrvorrichtung zu bestimmen und den Farbmesskopf (700) und dessen Messbereich (710) mittels der Verfahrvorrichtung an einer vorbestimmten Position auf der Oberfläche (115) des Bedruckstoffs (100) zu positionieren und mittels des Farbmesskopfs (700) die Farbkoordinaten des Bedruckstoffs im Messbereich (710) zu ermitteln und auszugeben.

7. . Prüfvorrichtung (1) nach einem der vorangehenden Ansprüche, **dadurch gekennzeichnet, dass** zusätzlich ein Mikroskop (720) mit der Verfahreinrichtung (600) oder einer weiteren Verfahreinrichtung gekoppelt ist, deren Position und Ausrichtung relativ zu der einen Verfahrvorrichtung bekannt ist, so dass zusätzlich gesteuert durch die Steuereinrichtung (50) Mikroskopbilder von der Oberfläche (115) des Bedruckstoffs (100) erfassbar und ausgebbar sind.

8. . Prüfvorrichtung (1) nach einem der vorangehenden Ansprüche, **dadurch gekennzeichnet, dass** die Transporteinrichtung (600) ausgebildet ist, den Bedruckstoff (100) wieder auf die den Rollenkern zurück aufzuwickeln, von dem der Bedruckstoff (100) ursprünglich abgewickelt wurde.

9. . Prüfvorrichtung (1) nach einem der vorangehenden Ansprüche, **dadurch gekennzeichnet, dass** die mindestens eine optische Erfassungseinrichtung (500) oder eine weitere Erfassungseinrichtung ausgebildet sind, einen mehrdimensionalen Code in dem Druckbild zu erfassen, um einen Druckbereich von mehreren Druckbereichen auf dem Bedruckstoff anhand einer in dem mehrdimensionalen Code codierten Identifikationsinformation zu identifizieren und die Farbkoordinaten gemeinsam mit der Identifikationsinformation und einer Positionsinformation, an der die Farbkoordinaten in dem Druckbild erfasst sind, auszugeben.

10. . Verfahren zum Prüfen eines farbigen Druckbilds eines auf einer Rolle bereitgestellten Bedruckstoffs (100) umfassend die Schritte:

zeitgleiches Aufwickeln und Abwickeln des Bedruckstoffs (100) mittels einer Transportvorrichtung (600), so dass eine Bahn (110) des abgewickelten Bedruckstoffs (100) durch einen Arbeitsbereich (300) geführt wird, optisches Erkennen mindestens eines Druckbildelements, Ermitteln der relativen Position und relativen Ausrichtung des Druckbildelements zu einer Verfahreinrichtung (600), mit der eine Farbmesskopf (700) verbunden ist,

Verfahren des Farbmesskopfs beabstandet zur Oberfläche der Bahn des Bedruckstoffs und parallel zu dieser Oberfläche und Positionieren eines Messbereichs des Farbmesskopfs an mindestens einer Messposition auf der Oberfläche des Bedruckstoffs zu positionieren, deren Position relativ zu dem mindestens einen erkannten Druckbildelement bekannt ist und vorgegeben ist;

Erfassen der Farbkoordinaten mittels des Farbmesskopfs (700) bezüglich mindestens einer Farbmetrik, und

Ausgeben der Farbkoordinaten, die eine Farbe des Bedruckstoffs (100) an der mindestens eine Messposition angeben.

Fig.1

Fig.2

Fig.3

Europäisches
Patentamt

European
Patent Office

Office européen
des brevets

# EUROPÄISCHER RECHERCHENBERICHT

**Nummer der Anmeldung**

EP 25 19 4258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 100 23 127 B4 (MANROLAND AG [DE]) 17. Juni 2010 (2010-06-17) * Zusammenfassung * * Anspruch 1 * * Absätze [0005], [0008] - [0010], [0017] - [0020], [0022] * * Abbildungen 1-4 * ----- | 1-5,9,10 | INV. B41F33/00 B41J15/00 G01J3/46 G01N21/25 H04N1/60 |
| X | DE 693 00 199 T2 (BOBST SA [CH]) 30. November 1995 (1995-11-30) * Seiten 1-8 * * Abbildung 1 * ----- | 1-3,5,7, 9,10 | |
| X | US 11 820 124 B2 (ERNST LARRY M [US]; RICOH CO LTD [JP]) 21. November 2023 (2023-11-21) * Zusammenfassung * * Spalte 3, Zeilen 25-35 * * Spalte 3, Zeile 65 - Spalte 4, Zeile 52 * * Spalte 4, Zeile 67 - Spalte 7, Zeile 59 * * Spalte 8, Zeilen 27-65 * * Spalte 9, Zeilen 3-5, 47-59 * * Spalte 10, Zeilen 10-44 * * Spalte 11, Zeilen 10-38 * * Spalte 12, Zeilen 6-29, 58-61 * * Spalte 13, Zeilen 30-38 * * Abbildungen 1-9 * ----- | 1-6,8-10 | |
| A | EP 2 407 309 A2 (ELTROMAT GMBH [DE]) 18. Januar 2012 (2012-01-18) * Zusammenfassung * * Absätze [0001] - [0040] * * Abbildungen 1-3 * ----- -/-- | 1-10 | |

**RECHERCHIERTE SACHGEBIETE (IPC)**

B41F
B41J
H04N
G01N
G01J

Der vorliegende Recherchenbericht wurde für alle Patentansprüche erstellt

| Recherchenort | Abschlußdatum der Recherche | Prüfer |
|---|---|---|
| München | 12. Dezember 2025 | Bellofiore, Vincenzo |

EPO FORM 1503 03.82 (P04C03)

Seite 1 von 2

**EP 4 691 778 A1**

Europäisches
Patentamt

European
Patent Office

Office européen
des brevets

## EUROPÄISCHER RECHERCHENBERICHT

**Nummer der Anmeldung**

EP 25 19 4258

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 3 124 246 B1 (MANROLAND WEB SYSTEMS GMBH [DE]) 27. Dezember 2017 (2017-12-27) * Absätze [0001] - [0030] * * Abbildungen 1-2 * ----- | 1-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 12. Dezember 2025 | Bellofiore, Vincenzo |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 .................................................................................................
& : Mitglied der gleichen Patentfamilie, übereinstimmendes
Dokument

Seite 2 von 2

## ANHANG ZUM EUROPÄISCHEN RECHERCHENBERICHT
## ÜBER DIE EUROPÄISCHE PATENTANMELDUNG NR.

EP 25 19 4258

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-12-2025

| Im Recherchenbericht angeführtes Patentdokument | Datum der Veröffentlichung | Mitglied(er) der Patentfamilie | Datum der Veröffentlichung |
|---|---|---|---|
| DE 10023127 B4 | 17-06-2010 | KEINE | |
| DE 69300199 T2 | 30-11-1995 | AT E123997 T1 | 15-07-1995 |
| | | BR 9300498 A | 10-08-1993 |
| | | CA 2088816 A1 | 08-08-1993 |
| | | CH 687138 A5 | 30-09-1996 |
| | | DE 69300199 T2 | 30-11-1995 |
| | | DK 0554811 T3 | 04-09-1995 |
| | | EP 0554811 A1 | 11-08-1993 |
| | | ES 2073309 T3 | 01-08-1995 |
| | | JP H05269978 A | 19-10-1993 |
| US 11820124 B2 | 21-11-2023 | KEINE | |
| EP 2407309 A2 | 18-01-2012 | DE 202010008084 U1 | 21-10-2011 |
| | | EP 2407309 A2 | 18-01-2012 |
| | | US 2012013733 A1 | 19-01-2012 |
| EP 3124246 B1 | 27-12-2017 | DE 102015111348 A1 | 19-01-2017 |
| | | EP 3124246 A1 | 01-02-2017 |

Für nähere Einzelheiten zu diesem Anhang : siehe Amtsblatt des Europäischen Patentamts, Nr.12/82